# EUROPÄISCHE PATENTSCHRIFT

(11) **EP 0 726 839 B1**
(45) Veröffentlichungstag und Bekanntmachung des Hinweises auf die Patenterteilung: **17.12.1997**
(21) Anmeldenummer: 94930227.7
(22) Anmeldetag: 26.10.1994
(51) Int. Cl.: B27M 1/08, B27C 5/06, B27C 9/02

(54) **BEARBEITUNGSZENTRUM ZUM SPANGEBENDEN BEARBEITEN VON PLATTENFÖRMIGEN WERKSTÜCKEN**
MACHINING CENTRE FOR THE MATERIAL-REMOVING MACHINING OF PLATE-LIKE WORKPIECES
CENTRE D'USINAGE DE PIECES EN FORME DE PLAQUES PAR ENLEVEMENT DE COPEAUX

(30) Priorität: 05.11.1993 DE 4337739
(43) Veröffentlichungstag der Anmeldung: 21.08.1996
(73) Patentinhaber: IMA Maschinenfabriken Klessmann GmbH, 32312 Lübbecke (DE)
(72) Erfinder: RIESMEIER, Wilhelm, D-32312 Lübbecke (DE); KEMPKENSTEFFEN, Heinz, D-33397 Rietberg 3 (DE)
(74) Vertreter: Elbertzhagen, Otto
(86) Internationale Anmeldenummer: EP9403518
(87) Internationale Veröffentlichungsnummer: WO9512479

(56) Entgegenhaltungen:
- EP-A- 0 540 505
- EP-A- 0 561 227
- DE-A- 3 019 692
- DE-A- 4 101 904

## Beschreibung

### TECHNISCHES GEBIET

Die Erfindung bezieht sich auf ein Bearbeitungszentrum zum spangebenden Bearbeiten von plattenförmigen Werkstücken aus Holz oder holzartigen Werkstoffen mit einem Bearbeitungsfeld mit einem oder mehreren Bearbeitungsplätzen, das zumindest eine Werkstückauflage mit in Richtung einer Längskoordinate (X-Achse) sowie einer Querkoordinate (Y-Achse) des Arbeitsfeldes justierbaren Saugspannern aufweist, und mit einer Bearbeitungseinheit mit einer Werkzeugspindel, die oberhalb des Bearbeitungsfeldes in Richtung mehrerer Achsen einschließlich der X-Achse sowie der Y-Achse verfahrbar ist.

### STAND DER TECHNIK

Mit solchen Bearbeitungszentren, die eine programmgesteuerte Bearbeitungseinheit haben, können die plattenförmigen Werkstücke, bei denen es sich insbesondere um Möbelteile oder Elemente für den Innenausbau handelt, von der Oberseite und von den Umfangsseiten her spangebend bearbeitet werden. Die Werkstücke können beispielsweise entlang ihres Umfanges befräst werden, um ihnen eine bestimmte Umrißkontur zu geben, oder man kann sie mit Durchgangsbohrungen oder Ausschnitten versehen, was mit Bezug auf die Aufspannung der Werkstücke auf der Werkstückauflage ebenso problematisch ist. Denn bei diesen Bearbeitungsvorgängen darf die Werkstückauflage nicht beschädigt werden, was erfordert, daß die Werkstücke auf der Werkstückauflage und gegebenenfalls auch die Werkstückauflage selbst im Bearbeitungsfeld frei in Richtung der X-Achse und der Y-Achse positionierbar sein müssen. Zudem besteht die Möglichkeit nicht, die Werkstücke auf einem durch das Bearbeitungsfeld taktweise hindurchlaufenden Fördermittel, wie einer Förderkette, zu spannen, welches während der einzelnen Bearbeitungsvorgänge mit dem betreffenden Werkstück am Bearbeitungsplatz angehalten wird. Denn die einzelnen Werkstücke können nicht störungsfrei an denjenigen Stellen bearbeitet werden, die von dem Fördermittel unterstützt werden. Vor allem bei einer Bearbeitung der Umfangskanten der Werkstücke wäre eine Kollision zwischen dem Bearbeitungswerkzeug und dem Fördermittel nicht ausgeschlossen.

Aus der DE-41 01 904 A1 ist eine numerisch gesteuerte Oberfräse bekannt, die ein Bearbeitungsfeld mit Saugspannern für die Werkstücke hat. Zum Beschicken und Räumen des Bearbeitungsfeldes ist eine Mehrzahl von miteinander verketteten Fördervorrichtungen vorgesehen, die Roboter, Eintrag- und Austragförderer, Richtungswechselförderer und Synchronisierförderer aufweisen. Für diese Fördersysteme ist eine aufwendige Steuerung erforderlich, um die Werkstücke jeweils positionsgenau transportieren und am Bearbeitungsfeld anordnen zu können.

### DIE ERFINDUNG

Der Erfindung liegt die Aufgabe zugrunde, ein Bearbeitungszentrum der gattungsgemäßen Art zu schaffen, bei dem die Beschickung der Werkstückauflage programmbezogen entsprechend der Werkstückkontur am Bearbeitungsfeld mit den Werkstücken sowie die Weiterbeförderung der Werkstücke nach der Bearbeitung maschinell vorgenommen werden kann.

Diese Aufgabe wird bei einem Bearbeitungszentrum der gattungsbildenden Art nach der Erfindung dadurch gelöst, daß an das Bearbeitungsfeld in Höhe der Werkstückauflage ein Einlaufförderer mit einer endseitigen Ausrichtstation sowie ein Auslaufförderer anschließen und zwischen diesen beiden Förderern entlang einer Seite des Bearbeitungsfeldes eine Transportvorrichtung mit die Werkstücke an ihrem einen Rand erfassenden, verfahrbaren Spannern angeordnet ist. Diese Transportvorrichtung übernimmt die Werkstücke an der Ausrichtstation am Ende des Einlaufförderers, befördert sie im wesentlichen niveaugleich zum Bearbeitungsfeld, übergibt sie dort an die Saugspanner der Werkstückauflage und transportiert sie von dort nach der Bearbeitung zum Auslaufförderer.

Für die Erfindung ist wesentlich bei dem Bearbeitungszentrum die Werkstücke taktweise durch das Bearbeitungsfeld hindurchzuschleusen, wobei die maschinelle Bedienung der Werkstückauflage ein exaktes Positionieren der Werkstücke gegenüber der Bearbeitungseinheit ermöglicht und die einseitige Anordnung der die Spanner aufweisenden Transportvorrichtung am Bearbeitungsfeld eine kollisionsfreie Bearbeitung möglich macht. Insbesondere können die Spanner der Transportvorrichtung nach der Übernahme der Werkstücke durch die Saugspanner der Werkstückauflage aus dem Bearbeitungsbereich bzw. dem -feld ganz herausgefahren werden, so daß sie eine Rundumbearbeitung der Werkstücke entlang deren Kanten nicht beeinträchtigen.

Zweckmäßig haben der Einlaufförderer sowie der Auslaufförderer zumindest in ihren unmittelbar an das Bearbeitungsfeld anschließenden Bereichen und die Transportvorrichtung dieselbe Förderrichtung, womit im Bereich des Bearbeitungszentrums ein geradliniger Transport der Werkstücke ohne Winkelübergaben erreicht ist.

Von besonderem Vorteil ist, wenn die Transportvorrichtung nach der Erfindung zwei Gruppen von Spannern hat, von denen die eine Gruppe zwischen der Ausrichtstation am Ende des Einlaufförderers sowie dem Bearbeitungsfeld und die zweite Gruppe zwischen dem Bearbeitungsfeld und dem Auslaufförderer verfahrbar ist. So kann die erste Gruppe der Spanner nach dem Ablegen der Werkstücke auf der Werkstückauflage am Bearbeitungsfeld wieder zu der Ausrichtstation zurückkehren, um dort das nächste Werkstück aufzunehmen, während die Bearbeitung des vorangehenden Werkstücks erfolgt. Gleichermaßen kann sich die zweite Gruppe der Spanner der Transportvorrichtung während der Werkstückbearbeitung in diejenige Position am Bearbeitungsfeld bringen, in der das jeweils bearbeitete Werkstück zum Weitertransport zum Auslaufförderer hin übernommen wird. Denn eine ausreichende Fixierung der Werkstücke nach der Positionierung auf der Werkstückauflage des Bearbeitungsfeldes ist durch die Saugspanner der Werkstückauflage sichergestellt.

Die Werkstückauflage kann mit einer Zusatzfunktion ausgestattet sein, die insbesondere für Werkstücke vorteilhaft ist, die lang und schwer sind und die von der randlichen Angriffstelle der Spanner der Transportvorrichtung aus weit in Richtung der Y-Achse vorkragen. Die Werkstückauflage kann dazu aus zwei oder mehreren, die Saugspanner aufweisenden Trägern bestehen, die parallel zur Transportvorrichtung in X-Richtung verfahrbar sind. Mindestens einer dieser Träger ist dann derart gesteuert, daß er bei Übernahme eines Werkstücks an der Ausrichtstation zum Einlaufförderer hin verfährt und im Rücklauf zum Bearbeitungsfeld hin das Werkstück unterstützt. Grundsätzlich kann die gesamte Werkstückauflage für eine solche Unterstützung der Werkstücke während des Transportes zum Bearbeitungsfeld hin genutzt werden, wobei auch eine Relativverschiebung der Werkstücke zur Transportvorrichtung vorgesehen werden kann, solange nicht die Saugspanner der Werkstückauflage das betreffende Werkstück fixiert haben. Ebenso kann auch zumindest einer der verfahrbaren Träger der Werkstückauflage beim Überführen eines Werkstücks vom Bearbeitungsfeld zum Auslaufförderer hin zur Unterstützung des betreffenden Werkstücks in Richtung zum Auslaufförderer hin mitfahren.

Nach einer Weiterbildung der Erfindung hat die Ausrichtstation ein Längslineal parallel zur Transport vorrichtung, also in X-Richtung, sowie senkrecht dazu eine Querschiene, gegen die die Werkstücke vom Einlaufförderer angelegt werden. Damit das jeweilige Werkstück kollisionsfrei zum Bearbeitungsfeld hin weitertransportiert werden kann ist die Querschiene für den niveaugleichen Weitertransport des Werkstücks wegbewegbar, was erfolgt, sobald das ausgerichtete Werkstück von den Spannern der Transportvorrichtung an der Ausrichtstation erfaßt worden ist.

Damit das jeweilige Werkstück an seiner ausgerichteten Längskante an der Ausrichtstation von den Spannern der Transportvorrichtung aufgenommen wird, ordnet man zweckmäßig das Längslineal an der Seite der Ausrichtstation an, an der sich die Transportvorrichtung befindet. Damit auch hier eine Kollision zwischen dem Längslineal und den Spannern der Transportvorrichtung ausgeschlossen ist, wird das Längslineal vor dem Erfassen des betreffenden Werkstücks aus dem Arbeitsbereich der Spanner herausbewegt.

Für den Transport der plattenförmigen Werkstücke eignen sich vor allem Rollenbahnen, so auch für den Einlaufförderer. Eine solche Rollenbahn hat dann im Bereich der Ausrichtstation Rollen, die in ihrer Förderebene relativ zur Förderrichtung derart geneigt sind, daß die Werkstücke eine Querförderkomponente zum Längslineal hin erhalten. Hierbei bezieht sich die Neigung der zylindrischen Rollen auf das Längslineal, auf dessen Anschlagebene die Achsen der Rollen nicht senkrecht sondern unter einem Winkel von weniger als 90° in Förderrichtung stehen.

### KURZBESCHREIBUNG DER ZEICHNUNGSABBILDUNG

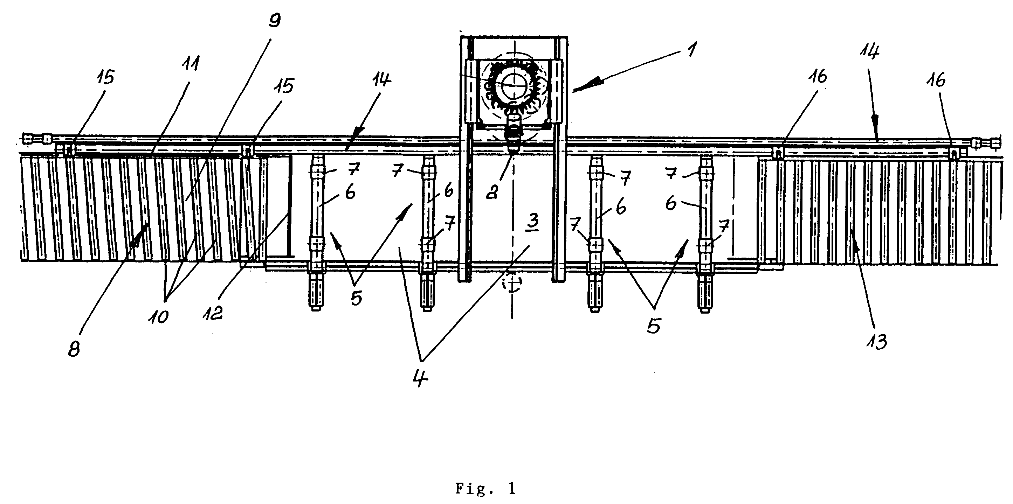

Die Erfindung wird nachfolgend anhand der Zeichnung an einem Ausführungsbeispiel noch näher erläutert. Die Zeichnung zeigt eine schematische Draufsicht auf ein Bearbeitungszentrum zum spangebenden Bearbeiten von plattenförmigen Werkstücken.

### BESTER WEG ZUR AUSFÜHRUNG DER ERFINDUNG

Im einzelnen erkennt man in der Zeichnung eine Bearbeitungseinheit 1 mit einer Werkzeugspindel 2, die eine nicht näher dargestellte Werkzeugaufnahme für spangebende Werkzeuge, wie Fräser, Bohrer, außer Mitte arbeitenden Werkzeugen, wie Sägen, oder dergleichen hat. Die Werkzeugspindel 2 ist in einem Bearbeitungsraum 3 in Richtung mehrerer Achsen verfahrbar, wobei der Arbeitsraum 3 nach unten hin durch ein Bearbeitungsfeld 4 mit Werkstückauflagen 5 begrenzt ist. Sowohl in Längsrichtung, der X-Richtung, als auch in Querrichtung, der YRichtung, wie senkrecht zu dem länglich rechteckigen Bearbeitungsfeld 4 kann die Werkzeugspindel 2 bewegt werden, zudem kann sie an einem umschlagbaren Spindelkopf sitzen, um beispielsweise eine vertikale oder eine horizontale Lage einzunehmen.

Die Werkstückauflage 5 wird durch mehrere Träger 6 gebildet, die an ihren Oberseiten miteinander niveaugleich ausgerichtete Vakuumspanner 7 zur Aufnahme plattenförmiger Werkstücke haben. Die Träger 6 sind senkrecht zu ihrer Längsrichtung, nämlich in der X-Richtung, jeweils für sich verfahrbar und können so justiert werden, daß bei den auftretenden Bearbeitungsvorgängen eine Kollision zwischen den Vakuumspannern 7 und dem Werkzeug in der Werkzeugspindel 2 ausgeschlossen ist. Dazu sind die Vakuumspanner 7 auf den Trägern 6 in Y-Richtung positionierbar. Auf der Werkstückauflage 5 können ein einziges oder mehrere Werkstücke angeordnet werden, entsprechend bietet das Bearbeitungsfeld 4 einen oder mehrere Bearbeitungsplätze.

Die Werkstückauflage 5 am Bearbeitungsfeld 4 wird maschinell beschickt, dazu hat das Bearbeitungsfeld 4 eine Einlauf- und eine Auslaufseite. An der Einlaufseite schließt höhengleich mit der Werkstückauflage 5 bzw. den Saugspannern 7 der Träger 6 ein Einlaufförderer 8 in Gestalt einer Rollenbahn an, der an seinem Ende als Ausrichtstation 9 für die Werkstücke ausgestaltet ist. Entlang der einen Seite der Ausrichtstation 9 erstreckt sich ein Längslineal 11 oberhalb der Rollen 10 des Einlaufförderers 8, gegen das die plattenförmigen Werkstücke mit ihren einen Seiten angelegt werden. Dazu sind die Rollen 10 im Bereich der Ausrichtstation 9 des Einlaufförderers 8 mit ihren in einer Horizontalebene liegenden Achsen relativ zum Längslineal 11 jeweils geneigt, der Neigungswinkel beträgt etwas weniger als 90° und öffnet in Förderrichtung. Des weiteren ist am Ende der Ausrichtstation 9 zum Bearbeitungsfeld 4 hin eine Querschiene 12 in Höhe des Förderweges des Einlaufförderers 8 angeordnet, an der sich die Werkstücke mit einer zweiten Kante, die rechtwinklig zu der ersten an dem Längslineal 11 anschlagenden Kante verläuft, ausrichten. Die Querschiene 12 ist aus dem Förderweg der Werkstücke herausbewegbar, damit diese von der Ausrichtstation 9 des Einlaufförderers 8 aus auf das Bearbeitungsfeld 4 einlaufen können.

An der Auslaufseite des Bearbeitungsfeldes 4 ist ein Auslaufförderer 13 angeordnet, zu dem die bearbeiteten Werkstücke transportiert werden. Die Beförderung der Werkstücke von der Ausrichtstation des Einlaufförderers 8 zum den Bearbeitungsfeld 4 der Maschine und von dort zu dem Auslaufförderer 13 hin besorgt eine Transportvorrichtung 14, die an der Rückseite des Bearbeitungsfeldes 4, an der auch die Bearbeitungseinheit 1 geführt ist, angeordnet ist. Die Transportvorrichtung 14 führt geradlinig von der Ausrichtstation 9 des Einlaufförderers 8, am Bearbeitungsfeld 4 vorbei bis zum Auslaufförderer 13 hin und kann ein- oder zweisträngig ausgebildet sein.

Beim dargestellten Ausführungsbeispiel ist die Transportvorrichtung 14 zweisträngig und weist eine erste Gruppe von Spannern 15 sowie eine zweite Gruppe von Spannern 16 auf, bei denen es sich um Spannpratzen oder dergleichen handelt, welche die plattenförmigen Werkstücke an den ihnen zugewandten Rändern erfassen, um sie in ihre Förderrichtung mitnehmen zu können. So sind die Spanner 15 von der Ausrichtstation 9 des Einlaufförderers 8 bis hin zum Bearbeitungsfeld 4 verfahrbar, während die zweiten Spanner 16 zwischen dem Bearbeitungsfeld 4 und dem Auslaufförderer 13 bewegt werden können. Die erste Gruppe 15 dieser Spanner ergreift an der Ausrichtstation 9 des Einlaufförderers 8 das jeweils ausgerichtete Werkstück und befördert es in dieser ausgerichteten Lage zum Bearbeitungsfeld 4 hin wo es von den Vakuumspannern 7 der Werkstückauflage 5 an dem betreffenden Bearbeitungsplatz im Bereich des längeren Bearbeitungsfeldes 4 übernommen wird. Bei langen und weit von den Spannern 15 wegkragenden Werkstücken kann eine Unterstützung des Transportes von der Ausrichtstation 9 bis zum Bearbeitungsplatz hin durch die Träger 6 der Werkstückauflage 5 erfolgen, indem die in Durchlaufrichtung der Maschine verfahrbaren Träger 6 zu der Ausrichtstation 9 hinbewegt und zusammen mit dem Werkstück bis zu der Position am Bearbeitungsplatz des Bearbeitungsfeldes 4 verfahren werden, die für die jeweilige Bearbeitung erforderlich ist. Bei der Bearbeitung sind die Werkstücke auf der Werkstückauflage 5 durch die Vakuumspanner 7 fixiert, so daß es der Lageausrichtung durch die Spanner 15 der Transportvorrichtung 14 nicht mehr bedarf. Diese Spanner 15 fahren deshalb nach der Übernahme des Werkstücks durch die Vakuumspanner 7 zurück zur Ausrichtstation 9 um dort das nächstfolgende Werkstück aufzunehmen.

In umgekehrter Bewegungsfolge erfolgt der Abtransport der bearbeiteten Werkstücke vom jeweiligen Bearbeitungsplatz des Bearbeitungsfeldes 4 zum Auslaufförderer 13 hin durch die zweiten Spanner 16 der Transportvorrichtung 14. Diese Spanner ergreifen das betreffende Werkstück am Bearbeitungsplatz und nehmen es gegebenenfalls mit Unterstützung von mitlaufenden Trägern 6 der Werkstückauflage 5 zum Auslaufförderer 13 hin mit.

## Patentansprüche

1. Bearbeitungszentrum zum spangebenden Bearbeiten von plattenförmigen Werkstücken aus Holz oder holzartigen Werkstoffen mit einem Bearbeitungsfeld (4) mit einem oder mehreren Bearbeitungsplätzen, das zumindest eine Werkstückauflage (5) mit in Richtung einer Längskoordinate (X-Achse) sowie einer Querkoordinate (Y-Achse) des Arbeitsfeldes justierbaren Saugspannern (7) aufweist, und mit einer Bearbeitungseinheit (1) mit einer Werkzeugspindel (2), die oberhalb des Bearbeitungsfeldes (4) in Richtung mehrerer Achsen einschließlich der X-Achse sowie der Y-Achse verfahrbar ist,
dadurch gekennzeichnet,
daß an das Bearbeitungsfeld (4) in Höhe der Werkstückauflage (5) ein Einlaufförderer (8) mit einer endseitigen Ausrichtstation (9) sowie ein Auslaufförderer (13) anschließen und zwischen diesen beiden Förderern (8, 13) entlang einer Seite des Bearbeitungsfeldes (4) eine Transportvorrichtung (14) mit die Werkstücke an ihrem einen Rand erfassenden, verfahrbaren Spannern (15, 16) angeordnet ist, welche die Werkstücke an der Ausrichtstation (9) am Ende des Einlaufförderers (8) übernehmen, im wesentlichen niveaugleich zum Bearbeitungsfeld (4) befördern sowie dort an die Saugspanner (7) der Werkstückauflage (5) übergeben und von dort nach der Bearbeitung zum Auslaufförderer (13) transportieren.

2. Bearbeitungszentrum nach Anspruch 1,
dadurch gekennzeichnet,
daß der Einlaufförderer (8) sowie der Auslaufförderer (13) zumindest in ihren unmittelbar an das Bearbeitungsfeld (4) anschließenden Bereichen und die Transportvorrichtung (14) dieselbe Förderrichtung, nämlich in Richtung der X-Achse, haben.

3. Bearbeitungszentrum nach Anspruch 1 oder 2,
dadurch gekennzeichnet,
daß die Transportvorrichtung (14) zwei Gruppen (15, 16) von Spannern hat, von denen die eine Gruppe (15) zwischen der Ausrichtstation (9) am Ende des Einlaufförderers (8) sowie dem Bearbeitungsfeld (4) und die zweite Gruppe (16) zwischen dem Bearbeitungsfeld (4) und dem Auslaufförderer (13) verfahrbar ist.

4. Bearbeitungszentrum nach einem der Ansprüche 1 - 3,
dadurch gekennzeichnet,
daß die Werkstückauflage (5) aus zwei oder mehreren, die Saugspanner (7) aufweisenden Trägern (6) besteht, die in Richtung der X-Achse parallel zur Transportvorrichtung (14) verfahrbar sind und von denen mindestens ein Träger (6) derart gesteuert ist, daß er bei Übernahme eines Werkstücks an der Ausrichtstation (9) zum Einlaufförderer (8) hin verfährt und im Rücklauf zum Bearbeitungsfeld (4) hin das Werkstück unterstützt.

5. Bearbeitungszentrum nach Anspruch 4,
dadurch gekennzeichnet,
daß zumindest einer der verfahrbaren Träger (6) der Werkstückauflage (5) beim Überführen eines Werkstücks vom Bearbeitungsfeld (4) zum Auslaufförderer (13) hin zur Unterstützung des betreffenden Werkstücks in Richtung zum Auslaufförderer (13) hin mitfährt.

6. Bearbeitungszentrum nach einem der Ansprüche 1 - 5,
dadurch gekennzeichnet,
daß die Ausrichtstation (9) ein Längslineal (11) parallel zur Transportvorrichtung (14) sowie senkrecht dazu eine Querschiene (12) hat, gegen die die Werkstücke vom Einlaufförderer (8) angelegt werden, wobei nach dem Erfassen des jeweiligen Werkstücks durch die Spanner (15) die Querschiene (12) für den niveaugleichen Weitertransport des Werkstücks zum Bearbeitungsfeld (4) wegbewegbar ist.

7. Bearbeitungszentrum nach Anspruch 6,
dadurch gekennzeichnet,
daß das Längslineal (11) der Ausrichtstation (9) an der Seite der Transportvorrichtung (14) angeordnet und vor dem Erfassen des jeweiligen Werkstücks durch die Spanner (15) aus deren Arbeitsbereich heraus wegbewegbar ist.

8. Bearbeitungszentrum nach Anspruch 6 oder 7,
dadurch gekennzeichnet,
daß der Einlaufförderer (8) eine Rollenbahn ist, die zumindest im Bereich der Ausrichtstation (9) Rollen (10) hat, die derart geneigt sind, daß die Werkstücke eine Querförderkomponente zum Längslineal (11) hin erhalten.

## Claims

1. Machining centre for chip-machining plate-like workpieces of wood or wood-type materials with a machining field (4) with one or more machining stations, which has at least one workpiece support (5) with suction clamps (7) adjustable in the direction of a longitudinal coordinate (X-axis) as well as transverse coordinate (Y-axis) of the work field, and with a machining unit (1) having a tool spindle (2) which is movable above the machining field (4) in the direction of several axes including the X-axis and Y-axis, characterised in that the machining field (4) is adjoined level with he workpiece support (5) by an inlet conveyor (8) with alignment station (9) at the end side and by an exit conveyor (13) wherein between these two conveyors (8,13) along one side of the machining field (4) is a transport device (14) with movable clamps (15,16) which seize the workpieces on one edge and which transfer the workpieces at the alignment station (9) at the end of the inlet conveyor (8) where they move them substantially level to the machining field (4) and there pass them to the suction clamps (7) of the workpiece support (5) and from there transport them after machining to the exit conveyor (13).

2. Machining centre according to claim 1 characterised in that the inlet conveyor (8) as well as the exit conveyor (13) at least in their areas directly adjoining the machining field (4), and the transport device (14) all have the same conveyor direction, namely in the direction of the X-axis.

3. Machining centre according to claim 1 or 2 characterised in that the transport device (14) has two groups (15,16) of clamps of which one group (15) is movable between the alignment station (9) at the end of the inlet conveyor (8) and the machining field (4) and the second group (16) is movable between the machining field (4) and exit conveyor (13).

4. Machining centre according to one of claims 1 to 3 characterised in that the workpiece support (5) consists of two or more supports (6) which have the suction clamps (7) and which are movable in the direction of the X-axis parallel to the transport device (14) and of which at least one support (6) is controlled so that it moves during the transfer of the workpiece at the alignment station (9) towards the inlet conveyor (8) and supports the workpiece in the return run to the machining field (4).

5. Machining centre according to claim 4 characterised in that at least one of the movable supports (6) of the workpiece support (5) moves together in the direction of the exit conveyor (13) during transfer of a workpiece from the machining field (4) to the exit conveyor (13) in order to support the relevant workpiece.

6. Machining centre according to one of claims 1 to 5 characterised in that the alignment station (9) has a longitudinal ruler (11) parallel to the transport device (14) as well as a cross rail (12) at right angles thereto against which the workpieces are placed from the inlet conveyor (8) wherein after each workpiece is seized by the clamps (15) the cross rail (12) can be moved away for the level transfer of the workpiece to the machining field (4).

7. Machining centre according to claim 6 characterised in that the longitudinal ruler (11) of the alignment station (9) is mounted at the side of the transport device (14) and can be moved out of the work area of the clamps before the relevant workpiece is seized by the clamps (15).

8. Machining centre according to claim 6 or 7 characterised in that the inlet conveyor (8) is a rolling track which has at least in the area of the alignment station (9) rollers (10) which are inclined so that the workpieces receive a transverse conveyor component towards the longitudinal ruler (11).

## Revendications

1. Centre d'usinage par enlèvement de copeaux de pièces en forme de plaques en bois ou en matières ligniformes avec un champ d'usinage (4) à un ou plusieurs postes d'usinage, lequel présente, au moins, un porte-pièce (5) avec des dispositifs ventouses (7) ajustables dans le sens d'une coordonnée longitudinale (axe X) ainsi que d'une coordonnée transversale (axe Y) du champ d'usinage (4) et avec une unité d'usinage (1) avec une broche porte-outils (2)
caractérisé en ce
qu'au niveau du porte-pièce (5), une bande transporteuse d'alimentation (8), terminée par une station d'alignement (9) ainsi qu'une bande transporteuse d'évacuation (13) sont raccordées au champ d'usinage (4) et qu'un dispositif de transport (14) est disposé entre ces deux bandes transporteuses (8, 13), le long de l'un des côtés du champs d'usinage (4), lequel dispositif de transport (14) est équipé de dispositifs ventouses (15, 16) déplaçables qui, saisissant les pièces à usiner par l'un de leurs bords, les prennent en charge à la station d'alignement (9), située à la fin de la bande transporteuse d'alimentation (8), les transportent sensiblement de niveau avec le champ d'usinage (4) où ils les remettent aux dispositifs ventouses (7) du porte-pièce (5) et les transportent de là à la bande transporteuse après usinage.

2. Centre d'usinage selon la revendication 1,
caractérisé en ce que
la bande transporteuse d'alimentation (8) ainsi que la bande transporteuse d'évacuation (13) se déplacent, tout au moins dans leurs zones jointoyant directement le champ d'usinage (4), dans le même sens que le dispositif de transport (14), en l'occurrence, dans le sens de l'axe X.

3. Centre d'usinage selon la revendication 1 ou 2,
caractérisé en ce que
le dispositif de transport (14) possède deux groupes (15, 16) de dispositifs ventouses, le premier (15) étant déplaçable entre la station d'alignement (9), située à l'extrémité de la bande transporteuse (8), et le champ d'usinage (4) et le deuxième (16) entre le champ d'usinage (4) et la bande transporteuse d'évacuation (13).

4. Centre d'usinage selon l'une des revendications 1 à 3,
caractérisé en ce que
le porte-pièce (5) est composé de deux ou de plusieurs supports (6) de ventouses (7) déplaçables dans le sens de l'axe X, parallèlement au dispositif de transport (14), un support (6) au moins étant commandé de sorte qu'il se déplace à destination de la bande transporteuse d'alimentation (8) lors de la prise en charge d'une pièce à usine à la station d'alignement (9) et la soutienne lors du retour à destination du champ d'usinage (4).

5. Centre d'usinage selon la revendication 4,
caractérisé en ce que
l'un des supports (6) du porte-pièce, au moins, se déplace aussi lors du transport d'une pièce usinée du champ d'usinage (4) à la bande transporteuse d'évacuation (13) afin de soutenir la pièce usinée en direction de la bande transporteuse d'évacuation (13).

6. Centre d'usinage selon l'une des revendications 1 à 5,
caractérisé en ce que
la station d'alignement (9) présente une règle longitudinale (11) parallèle au dispositif de transport (14) ainsi qu'un rail transversal (12, perpendiculaire à la dite règle, contre lesquels les pièces à usiner en provenance de la bande transporteuse d'alimentation (8) sont appliquées, le rail transversal (12) pouvant être mis hors de portée pour la poursuite du transport à même niveau de la pièce respective à destination du champ d'usinage (4), après qu'elle ait été saisi par les ventouses (15).

7. Centre d'usinage selon la revendication 6,
caractérisé en ce que
la règle longitudinale (11) de la station d'alignement (9) est disposée à côté du dispositif de transport (14) et peut être mine hors du champ d'action des dispositifs ventouses (15) avant que ceux-ci saisissent une pièce à usiner.

8. Centre d'usinage selon la revendication 6 ou 7,
caractérisé en ce que
la bande transporteuse d'alimentation (8) est un transporteur comportant, tout au moins dans la zone de la station d'alignement (9), des rouleaux (10) qui sont inclinés de sorte que les pièces à usiner obtiennent une composante de transport latérale en direction de la règle longitudinale (11).
